# EUROPÄISCHE PATENTSCHRIFT

(11) **EP 0 848 861 B1**
(45) Veröffentlichungstag und Bekanntmachung des Hinweises auf die Patenterteilung: **05.12.2001**
(21) Anmeldenummer: 96937985.8
(22) Anmeldetag: 02.09.1996
(51) Int. Cl.: H01Q 1/52, H01Q 1/22, G06K 17/00

(54) **VORRICHTUNG ZUR BERÜHRUNGSLOSEN ÜBERTRAGUNG VON DATEN AN MOBILE DATENTRÄGER MIT ANNÄHERUNGSSCHUTZ**
DEVICE FOR THE CONTACTLESS TRANSMISSION OF DATA TO MOBILE DATA CARRIERS WITH SYSTEM FOR PREVENTING TOO CLOSE AN APPROACH
DISPOSITIF POUR TRANSFERER, SANS CONTACT, DES DONNEES A DES SUPPORTS DE DONNEES MOBILES, AVEC MOYENS D'EMPECHEMENT D'APPROCHE

(30) Priorität: 05.09.1995 DE 29514235 U
(43) Veröffentlichungstag der Anmeldung: 24.06.1998
(73) Patentinhaber: Häni-Prolectron AG, 9552 Bronschhofen (CH)
(72) Erfinder: BRUMMER, Wolfgang, D-90425 Nürnberg (DE); ELBINGER, Gerd, D-90766 Fürth (DE)
(74) Vertreter: Fischer, Michael, Dr.
(86) Internationale Anmeldenummer: DE9601629
(87) Internationale Veröffentlichungsnummer: WO9709749

(56) Entgegenhaltungen:
- WO-A-95/01010
- FR-A- 2 679 670
- FR-A- 2 702 324

## Beschreibung

Die Erfindung bezieht sich auf eine Vorrichtung zur berührungslosen Übertragung zumindest von Daten zu mobilen Datenträgern, insbesondere Chipkarten, über ein elektromagnetisches Feld, mit einer Antenne zur Datenabstrahlung an die mobilen Datenträger und/oder zum Datenempfang von den mobilen Datenträgern gemäß Oberbegriff des Patentanspruches.

In der Identifikationstechnik ist es üblich, Daten zwischen einem in der Regel ortsfesten Schreib- und Lesegerät und mobilen Datenspeichern berührungslos auf induktivem Wege zu übertragen. Hierzu wird vom Schreib- und Lesegerät ein hochfrequentes elektromagnetisches Feld aufgebaut. Dieses dient durch geeignete Modulation zum einen zur Übertragung von Daten zum mobilen Datenträger bzw. zum Empfang von Daten vom mobilen Datenträger. Zum anderen wird über das Feld vielfach auch elektrische Energie auf induktivem Wege zu einem mobilen Datenträger übertragen, um diesen zumindest vorübergehend in einen sende- oder empfangsbereiten Zustand zu versetzen. Auf eine separate Energieversorgung des mobilen Datenträgers z.B. mit einer Batterie kann dann verzichtet werden.

Zur Ermöglichung derartiger Daten- und Energieübertragungen von einem Schreib- und Lesegerät zu einem mobilen Datenspeicher auf berührungslose Weise ist es zumindest erforderlich, daß der mobile Datenspeicher durch ausreichende Annäherung in den Sende- und Empfangsbereich des Schreib- und Lesegeräts, d.h. dessen hochfrequentes Induktiorisfeld, gebracht wird.

Aus der FR 2 679 670 A1 ist ein System der eingangs genannten Art bekannt, bei dem im Gehäuse einer stationären Lese-/Sendestation eine kastenförmige Aussparung eingebracht ist, in die der mobile Datenträger zum Datenaustausch eingelegt wird. Dabei ist die Aussparung gerade so ausgebildet, daß der Datenträger, insbesondere die Chipkarte, darin formschlüssig geführt und in die lagerichtige Position gebracht wird. Weiterhin sind aus der WO 95/01010 A1 und der FR 2 702 324 A1 mobile Fernsprecheinrichtungen bekannt, bei denen jeweils den Sende-/Empfangsantennen Mittel zur Abschirmung der elektromagnetischen Strahlung vom Schädel des Nutzers zugeordnet sind.

Bei Vorrichtungen der eingangs genannten Art können andererseits Probleme auftreten, wenn der mobile Datenspeicher z.B. in Form eines Ausweises von einer Person gehandhabt werden muß oder an dessen Bekleidung befestigt ist. Derartige Anwendungen treten z.B. bei mobilen Datenspeichern auf, welche z.B. zur Ermöglichung eines automatischen, berührungslosen Zugangs von Personen z.B. zu Einrichtungen des öffentlichen Nahverkehrs, Freizeiteinrichtungen u.v.m. eingesetzt werden. Unter diesen Personen können sich Individuen befinden, in deren Körper ein medizinisches Implantat, wie z.B. ein Herzschrittmacher, eine Insulinpumpe u.dgl., eingesetzt ist. Es ist nicht ganz auszuschließen, daß von berührungslosen Identifikationsvorrichtungen der oben genannten Art abgestrahlte hochfrequente elektromagnetische Wechselfelder bei zu starker Annäherung eines Implantatträgers an ein Schreibund Lesegerät unerwünschte Betriebsbeeinträchtigungen des implantierten Gerätes hervorrufen.

Der Erfindung liegt somit die Aufgabe zugrunde, eine derartige Vorrichtung zur berührungslosen Übertragung von Daten und gegebenenfalls auch Energie zu mobilen Datenträgern so auszubilden, daß eine möglicherweise gefährdende Annäherung von Personen mit medizinischen Implantaten verhindert wird.

Die Aufgabe wird gelöst mit der im Patentanspruch angegebenen Vorrichtung.

Die Erfindung wird mit den in den nachfolgend kurz angeführten Figuren dargestellten Beispielen näher erläutert. Dabei zeigt
- Fig.1.: eine erste Ausführung für eine erfindungsgemäß gestaltete Vorrichtung in Gehäuseform und mit bügelartig ausgestalteten Abstandsmitteln,
- Fig.2.: eine zweite Ausführung für eine erfindungsgemäß gestaltete Vorrichtung in Gehäusefonn und mit längskeil- oder blendenartig ausgestalteten Abstandsmitteln,
- Fig.3.: eine dritte Ausführung für eine erfindungsgemäß gestaltete Vorrichtung in einer auf einer umgebenden Haltefläche eingelassenen Form und mit bügelartig ausgestalteten Abstandsmitteln,
- Fig.4.: eine vierte Ausführung für eine erfindungsgemäß gestaltete Vorrichtung in einer in eine umgebende Haltefläche eingelassenen Form und mit muldenförmig ausgestalteten Abstandsmitteln, und
- Fig.5.: eine fünfte Ausführung für eine erfindungsgemäß gestaltete Vorrichtung mit in Form von beispielhaft zwei Erhebungen ausgestalteten Abstandsmitteln.

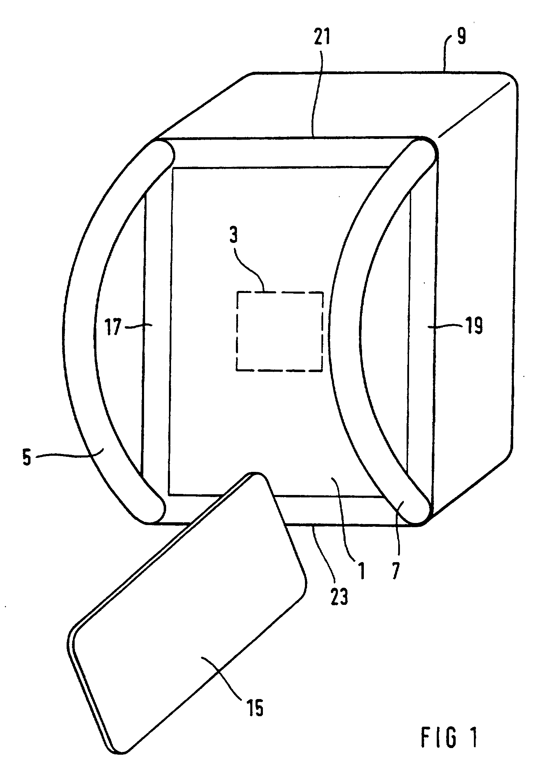

Gemäß der Darstellung in Figur 1 dient die Vorrichtung zur berührungslosen Übertragung von Daten und gegebenenfalls Energie zu einem beispielhaften mobilen Datenträger 15 über ein elektromagnetisches Feld. Der Datenträger kann dabei die Form einer Chipkarte aufweisen, welche zur Ermöglichung der Daten- und gegebenenfalls auch Energieübertragung in die räumliche Nähe der Übertragungsvorrichtung gebracht werden muß. Diese ist im Beispiel der Figur 1 in einem separaten Gehäuse 9 untergebracht. Bevorzugt im Bereich der Frontseite des Gehäuses befindet sich eine Antenne 3 zur Datenabstrahlung an die und/oder zum Datenempfang von dem beispielhaften mobilen Datenträger 15. Eine Antennenfeldfläche 1 dient zumindest zur Abdeckung der Antenne 3, welche bevorzugt in Vergußmaterial einlaminiert, auf der Rückseite der Antennenfeldfläche angebracht, und aus diesem Grund in Figur 1 in strichlierter Linie dargestellt ist.

Erfindungsgemäß verfügt die Vorrichtung über Abstandsmittel 5,7, welche an mindestens einem Randbereich 17 und/oder 19 der Antennenfeldfläche 1 befindlich und so gestaltet sind, daß eine zu starke Annäherung von Rumpfbereichen von insbesondere menschlichen Körpern, insbesondere von Brust-, Rücken- und Beckenpartien, an die Antennenfeldfläche 1 verhindert wird. Die lichte Weite der Antennenfeldfläche 1 ist somit in etwa so ausgelegt, daß ein mobiler Datenträger 1 von einer Person, z.B. mit einer Hand, in die unmittelbare räumliche Nähe der Antennenfeldfläche 1 gebracht werden kann, d.h. in den Raum zwischen die im Beispiel der Figur 1 paarig und gegenüberliegend angebrachten Abstandsmittel 5,7.

Andererseits kann aber durch die im Bereich eines oder mehrerer Randbereiche um die Antennenfeldfläche angebrachten Abstandsmittel gezielt verhindert werden, daß z.B. versehentlich und unbeabsichtigt großflächigere Partien insbesondere eines menschlichen Körpers, z.B. Brust-, Rücken und Beckenbereiche, u.U. unmittelbar in Kontakt mit der Antennenfeldfläche kommen und somit Funktionsstörung von implantierten Geräten zumindest nicht ausgeschlossen sind. Insbesondere in Fällen, bei denen eine gehäuseartige Schreib- und Lesevorrichtung z.B. nach Figur 1 zum Zwecke der Abbuchung von Werteinheiten gut zugänglich in von Personen stark frequentierten Bereichen angebracht ist, z.B. im Inneren von Transportmitteln wie Bussen und Bahnen, ist es auf Grund von Erschütterungen und Menschenansammlungen nicht ausgeschlossen, daß eine Person gegen die Antennenfeldfläche gestoßen wird. Insbesondere in einem solchen Fall müssen die erfindungsgemäßen Abstandsmittel eine unzulässig starke Annäherung empfindlicher Körperpartien an die Antennenfeldfläche verhindern.

Bei dem in Figur 1 dargestellten Beispiel sind die Abstandsmittel in Form von zwei Bügeln 5,7 ausgestaltet, welche an zwei gegenüberliegenden, vertikalen Seitenrändern 17,19 der Antennenfeldfläche 1, d.h. insbesondere an den Hochkanten des Gehäuses, angeordnet sind. Bei Bedarf ist es auch möglich, an den beiden gegenüberliegenden, horizontalen Seitenrändern 21,23 der Antennenfeldfläche, d.h. insbesondere an den Querkanten des Gehäuses, zusätzliche Abstandsbügel anzuordnen.

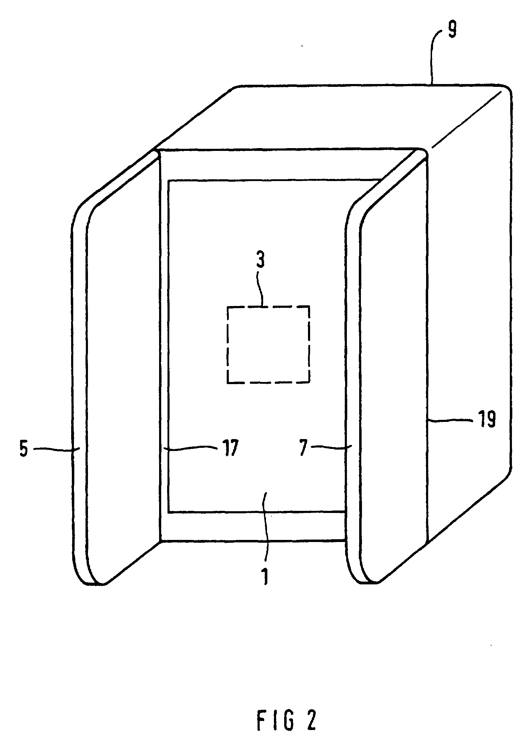

Bei einer anderen Ausführung können die Abstandsmittel 5,7 auch in Form von mindestens einem Längskeil oder einer Blende ausgestaltet sein. Bei dem in Figur 2 dargestellten Beispiel sind die Abstandsmittel als Seitenwände 5,7 an zwei gegenüberliegenden Seiten 17,19 der Antennenfeldfläche angeordnet.

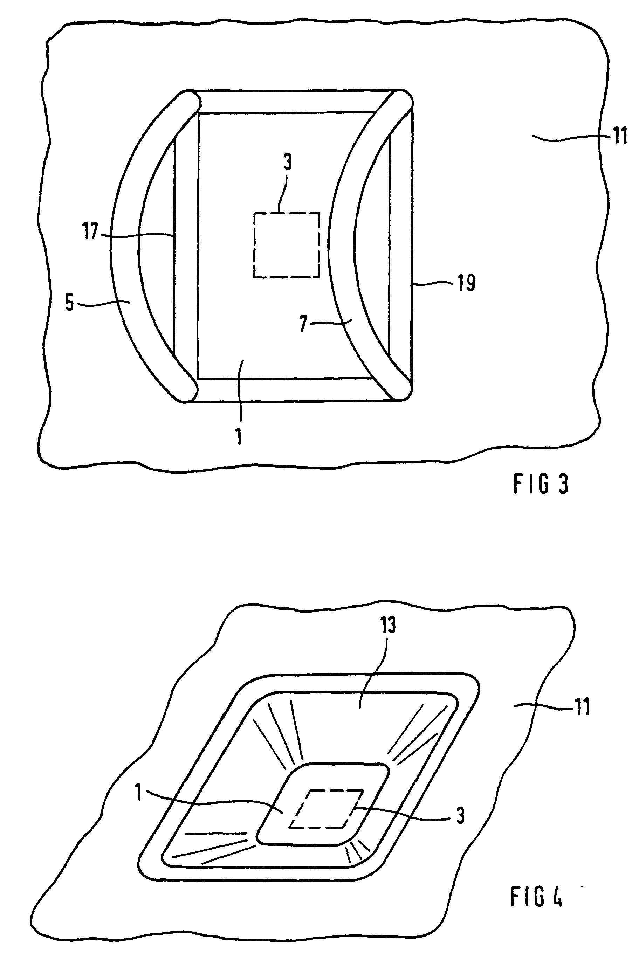

Bei dem in Figur 3 dargestellten Beispiel ist die Antennenfeldfläche 1 mit der dahinter liegenden Antenne 3 bevorzugt bündig in einer umgebenden Haltefläche 11 eingelassen. Diese kann z.B. eine Innen- oder Außenwand eines Raumes bzw. Gebäudes sein. Die Antennenfeldfläche 1 ist dann bevorzugt etwa in der Höhe der Hüfte bzw. Brust einer durchschnittlich großen Person von Laufboden in die Haltefläche eingelassen. In Figur 3 sind die Abstandsmittel wiederum bügelartig ausgestaltet.

Bei dem in Figur 4 dargestellten Beispiel sind schließlich die Abstandsmittel in Form einer die Antennenfeldfläche 1 aufnehmenden Mulde 13 ausgestaltet. Der Muldenboden wird gebildet von der Antennenfeldfläche 1. Die Mulde kann schüsselförmig oder auch oval gestaltet sein, und ist in einer umgebenden Haltefläche 11 eingelassen bzw. ein Teil derselben.

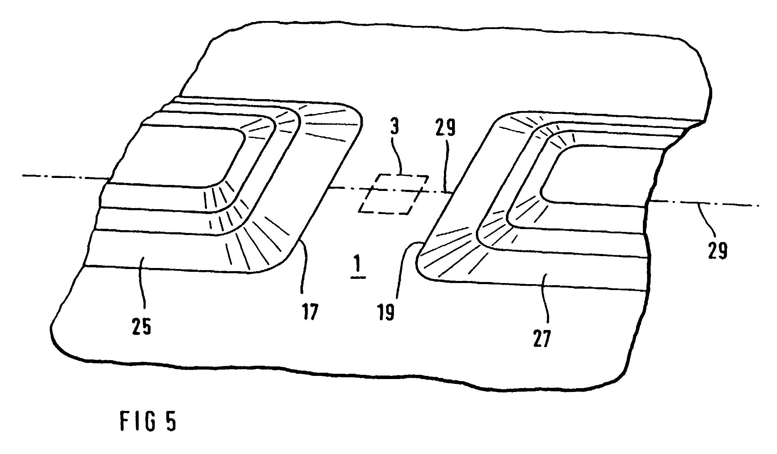

Bei einem weiteren, in Figur 5 dargestellten Ausführungsbeispiel sind die Abstandsmitteln in Form von mindestens einer Erhebung ausgestaltet, welche an mindestens einem Randbereich der Antennenfeldfläche 1 angeordnet ist. Die Erhebung kann dabei z.B. buckel- oder rückenförmig ausgebildet sein. Die Erhebung kann auch Bestandteil einer Abdeckung oder Bedienplatte eines benachbarten Gerätes bzw. mit diesem verbunden bzw. in dieses integriert sein. Wie bereits in Figur 5 dargestellt sind die Abstandsmittel vorteilhaft in Form von zwei, an gegenüberliegenden Randbereichen 17,19 der Antennenfeldfläche 1 entlang einer beispielhaft horizontalen Flucht- oder Symmetrielinie 29 verlaufenden Erhebungen 25,27 ausgestaltet.

## Patentansprüche

1. Vorrichtung zur berührungslosen Übertragung zumindest von Daten zu mobilen Datenträgern (15), insbesondere Chipkarten, über ein elektromagnetisches Feld, mit
- einer Antenne (3) zur Datenabstahlung an die und/oder zum Datenempfang von den mobilen Datenträgern (15),
- einer Antennenfeldfläche (1) zumindest zur Abdeckung der Antenne (3) und mit
- einer Vertiefung (13), die die Antennenfeldfläche (1) aufnimmt,
**dadurch gekennzeichnet, dass**
- die Vertiefung durch eine schüsselförmige oder ovale Mulde gebildet ist, die allseits als Abstandsmittel wirkt und eine zu starke Annäherung von Rumpfbereichen von insbesondere menschlichen Körpern, insbesondere von Brust, Rücken- und Beckenpartien, an die Antennenfeldfläche (1) verhindert.

## Claims

1. Device for the contactless transmission at least of data to mobile data carriers (15), especially chip cards, via an electromagnetic field, with
- an antenna (3) for radiating the data to the mobile data carriers and/or for receiving data from the mobile data carriers (15),
- an antenna field surface (1) at least to cover the antenna (3), and
- an indentation (13) which receives the antenna field surface (1),
**characterised in that**
- the indentation is formed by a bowl-shaped or oval depression which functions as a stand-off element on all sides and prevents parts of the torso, especially of human bodies, especially parts of the chest, back and pelvis, from approaching too close to the antenna field surface (1).

## Revendications

1. Dispositif pour la transmission sans contact au moins de données à des supports (15) de données mobiles, notamment des cartes à puce, par l'intermédiaire d'un champ électromagnétique, comportant
- une antenne (3) pour émettre des données à destination des supports (15) de données mobiles et/ou pour en recevoir des données,
- une surface (1) de réseau d'antennes au moins pour recouvrir l'antenne (3) et comportant
- un renfoncement (13) qui reçoit la surface (1) de réseau d'antennes,
**caractérisé en ce que**
- le renfoncement est formé par un creux en forme de cuvette ou ovale qui agit de tout côté comme moyen de maintien à distance et empêche que des parties du tronc notamment de corps humain, notamment des parties de la poitrine, du dos et du bassin ne s'approchent trop fortement de la surface (1) de réseau d'antennes.
